# FASCICULE DE BREVET EUROPEEN

(11) **EP 1 852 289 B1**
(45) Date de publication et mention de la délivrance du brevet: **05.08.2009**
(21) Numéro de dépôt: 07107383.7
(22) Date de dépôt: 02.05.2007
(51) Int. Cl.: B60J 7/00, B60R 5/04

(54) **Dispositif d'occultation pour véhicule à toiles solidarisables, et véhicule automobile correspondant**
Abdeckungsvorrichtung für Kraftfahrzeug mit zu einem Stück kombinierbaren Abdeckblenden und entsprechendes Kraftfahrzeug
Device for concealing an automobile, with solidly attachable canvas and corresponding vehicle

(30) Priorité: 02.05.2006 FR 0603910; 27.07.2006 FR 0606899
(43) Date de publication de la demande: 07.11.2007
(73) Titulaire: Wagon SAS, 79302 Bressuire Cédex (FR)
(72) Inventeur: Fourel, Pascall, 35400 Saint Malo (FR); Devanne, Christophe, 79300 Chambroutet (FR)
(74) Mandataire: Bioret, Ludovic

(56) Documents cités:
- EP-A- 1 609 653
- US-B1- 6 948 766

## Description

### 1. Domaine de l'invention

Le domaine de l'invention est celui des équipements pour véhicules automobiles. Plus précisément, l'invention concerne l'occultation des surfaces d'un véhicule automobile. Elle concerne en particulier les cache-bagages, mais également les stores occultants des surfaces vitrées ou les ouvertures, comme les stores de toit, les stores de hayon et les stores de pare-brise, les coupe-vents, et tous les systèmes similaires pouvant mettre en oeuvre des toiles ou écrans amovibles.

### 2. Solutions de l'art antérieur

On connaît de nombreuses solutions de systèmes d'occultation pour les véhicules automobiles. Ces systèmes d'occultation sont souvent constitués de toiles d'occultation qui sont montées sur un tube enrouleur placé dans une cassette.

Dans certains cas, cette cassette peut être amovible. C'est souvent le cas, notamment, des cassettes de cache-bagages ou des cassettes de stores de pare-brise. Ces cassettes peuvent ainsi être stockées dans le véhicule (ou à l'extérieur de celui-ci) quand elles ne sont pas utilisées.

Un inconvénient de cette solution est que ces cassettes sont de dimensions importantes. En effet, les stores ou toiles d'occultation qu'elles comprennent présentent généralement une largeur proche de la largeur du véhicule, de façon à couvrir toute la surface du coffre, du pare-brise, ou du pavillon du véhicule. Il est donc difficile de trouver dans le véhicule un emplacement pratique de stockage de ces cassettes de grande longueur.

Des cassettes pliantes ont été envisagées pour répondre à ce problème. Ces cassettes contiennent deux tubes enrouleurs qui sont alignés, dans leur position d'utilisation, pour permettre de déployer deux toiles parallèlement. La cassette, une fois pliée, présente une longueur presque deux fois moins importante que si elle ne contenait qu'une seule toile couvrant la même surface.

Cependant, les deux toiles d'occultation présentent un aspect beaucoup moins satisfaisant que les toiles uniques, en utilisation. En effet, du fait de la disposition des tubes enrouleurs dans les deux parties de la cassette, de part et d'autre d'une charnière, les toiles d'occultation ne peuvent pas être jointives, et il existe donc entre les toiles une fente non occultée. Cet inconvénient est difficilement acceptable sur les véhicules, notamment sur des véhicules haut de gamme.

Par ailleurs, la jonction des différents éléments du store, comme par exemple des barres de tirage, peuvent présenter des difficultés techniques, et les solutions présentées actuellement ne sont pas réellement satisfaisantes pour l'utilisateur. Le document US 6 948 766 B1 décrit un dispositif d'occulation correspondant au préambule de la revendication 1.

### 3. Objectifs de l'invention

L'invention a notamment pour objectif de pallier ces inconvénients de l'art antérieur.

Plus précisément, un objectif de l'invention est de fournir une solution de système d'occultation comprenant plusieurs toiles dans une même cassette, et présentant un aspect proche de celui d'une toile unique.

Pour certains modes de réalisation particuliers, l'invention a également pour objectif de fournir une solution de cassette pliante pour de tels stores qui soit particulièrement fiable et facile à installer.

### 4. Exposé de l'invention

Ces objectifs, ainsi que d'autres qui apparaîtront par la suite, sont atteints à l'aide d'un dispositif d'occultation d'une surface d'un véhicule automobile selon la revendication 1.

Ainsi, les toiles sont enroulées sur les tubes enrouleurs de façon indépendantes, mais sont jointes dès qu'elles sont déployées. On conserve ainsi la qualité d'occultation d'une toile unique, tout en rendant possible de nombreuses applications, telles que le pliage de la cassette.

De façon avantageuse, lesdits moyens de solidarisation sont mis en oeuvre progressivement, au fur et à mesure du déploiement desdites toiles.

Selon un mode de réalisation préférentiel, le dispositif de l'invention comprend un élément assurant la jonction desdits moyens de solidarisation desdits bords, ledit élément de jonction étant situé à proximité du ou desdits tubes enrouleurs.

Avantageusement, lesdits moyens de solidarisation et ledit élément de jonction forment une fermeture à glissière. On peut noter que, selon l'approche de l'invention, l'élément de jonction reste immobile (par rapport à la cassette) et que ce sont les toiles qui se déplacent.

Bien sûr de nombreux autres moyens de solidarisation progressive connus peuvent être adaptés et mis en oeuvre.

Avantageusement, au moins une desdites toiles d'occultation est au moins partiellement déformable. En effet, lorsqu'elles sont enroulées, leurs bords ne sont pas en contact, alors qu'ils doivent l'être lorsque les toiles sont déployées.

Pour ceci, on peut prévoir qu'au moins une desdites toiles d'occultation comporte une portion élastique portant une partie desdits moyens de solidarisation.

Selon un mode de réalisation préférentiel, chacune desdites toiles est montée sur un tube enrouleur distinct.

Ainsi, lesdits tubes enrouleurs peuvent notamment prendre au moins deux positions :
- une première position dans laquelle lesdits tubes enrouleurs sont situés sensiblement sur un même axe ; et
- au moins une deuxième position dans laquelle les axes desdits tubes enrouleurs forment entre eux un angle non nul.

Cette approche permet que lesdits tubes enrouleurs soient montés dans une cassette pliable.

Dans ce cas, ladite cassette comprend avantageusement des moyens de verrouillage dans ladite première position et/ou au dans moins une desdites deuxièmes positions desdits tubes enrouleurs.

Ladite cassette pliable peut notamment être formée de deux demi-cassettes articulées l'une par rapport à l'autre.

Avantageusement, dans ce cas, ledit élément de jonction de fermeture à glissière comprend deux portions de jonction, montés respectivement sur l'une desdites demi-cassettes, et rapprochées l'une de l'autre lorsque lesdits tubes enrouleurs sont dans ladite première position.

On dispose ainsi d'un système simple et efficace, dans lequel le curseur n'est assemblé que dans une position. Il est formé de deux moitiés, séparées l'une de l'autre lorsque la cassette est pliée.

Cette approche permet de simplifier la mise en oeuvre de l'invention, et notamment de supprimer, ou au moins réduire, la nécessité d'un bord de toile élastique.

Lesdites portions de jonction sont avantageusement sensiblement affleurantes avec la paroi latérale de la demi-cassette correspondante.

Ceci facilite le rangement, et limite les risques de détérioration.

Préférentiellement, dans la ou lesdites deuxièmes positions, chacune desdites portions de jonction maintien une extrémité des moyens de solidarisation de la toile correspondante.

Ladite cassette pliable comprend également avantageusement une poignée de transport.

Parmi les différentes applications de l'invention, on peut notamment citer :
- les cache-bagages ;
- les stores de compartimentage de coffre ;
- les stores d'occultation de pavillon ;
- les stores d'occultation de lunette arrière ;
- les stores d'occultation de pare-brise ;
- les stores de protection extérieure ou intérieure de pare-brise ;
- les dispositifs coupe-vent.

L'invention concerne également les véhicules automobiles comprenant au moins un dispositif d'occultation tel que décrit ci-dessus.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un dispositif d'occultation selon un mode de réalisation de l'invention, en cours de déploiement ;
- la figure 2 est une vue de détail des moyens de solidarisation du dispositif d'occultation de la figure 1 ;
- la figure 3 est une vue de détail des moyens de solidarisation selon un autre mode de réalisation de l'invention ;
- la figure 4 présente le dispositif d'occultation de la figure 1 dans une position partiellement pliée ;
- la figure 5 est une vue de détail du dispositif de la figure 4 ;
- la figure 6 est une vue partielle d'un dispositif d'occultation selon un autre mode de réalisation de l'invention ;
- la figure 7 est une autre vue partielle du dispositif d'occultation de la figure 6 ;
- la figure 8 est une vue partielle d'un dispositif d'occultation selon encore un autre mode de réalisation de l'invention, présentant une poignée, en position partiellement pliée ;
- la figure 9 est une autre vue partielle du dispositif d'occultation de la figure 8, en position d'utilisation ;
- les figures 10, 11 et 12 représentent partiellement les moyens de verrouillage en position d'utilisation d'une cassette pliable selon trois autres modes de réalisation de l'invention ;
- les figures 13 et 14 sont deux vues partielles des moyens de verrouillage en position d'utilisation d'un dispositif d'occultation selon encore un autre mode de réalisation de l'invention, en position d'utilisation et en position en cours de pliage, respectivement ;
- la figure 15 est une vue partielle d'une poignée d'un dispositif d'occultation selon encore un autre mode de réalisation de l'invention, en position partiellement pliée ;
- la figure 16 est une autre vue partielle du dispositif d'occultation de la figure 15, en position d'utilisation ;
- les figures 17 à 20 illustrent un mode de réalisation de l'invention, selon lequel la jonction des toiles est assurée par un curseur formé de deux portions de curseur :

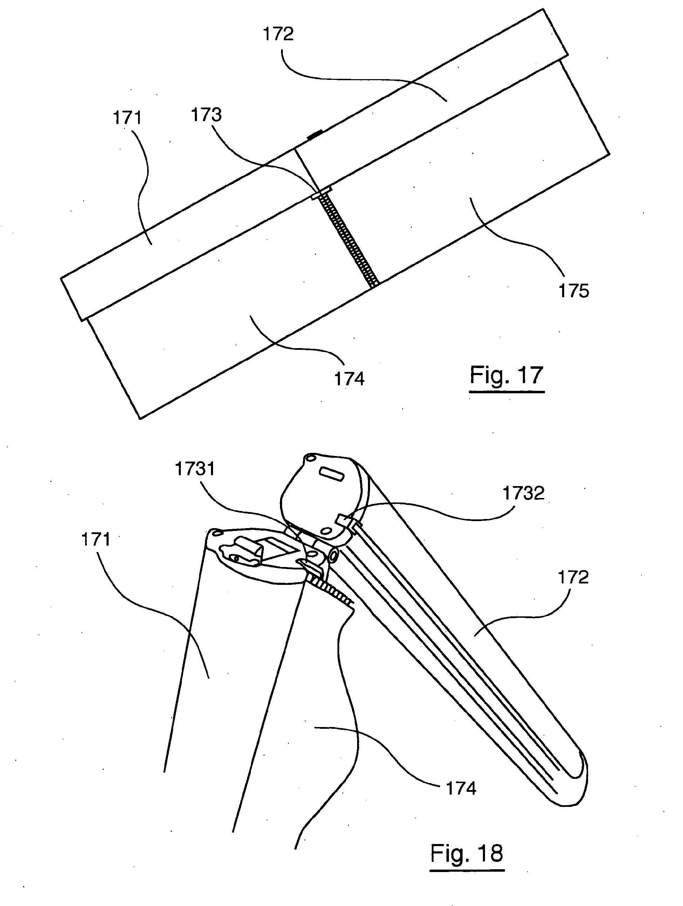

   - figure 17 : cache-bagages selon l'invention, en position de travail ;
   - figure 18 : cache-bagages de la figure 17, en cours de pliage ;

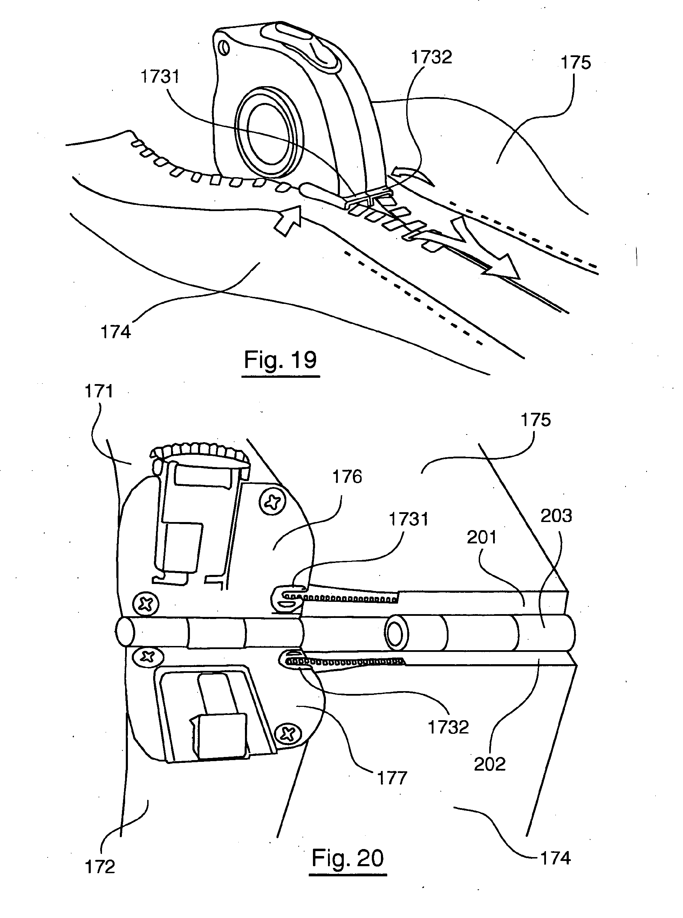

   - figure 19 : vue du curseur en position de travail, selon un premier mode de réalisation sans palette ;
   - figure 20 : vue du curseur en cours de pliage, selon un second mode de réalisation avec palette.

### 6. Description détaillée de l'invention

### 6.1 Rappel du principe de l'invention

Le principe général de l'invention repose sur des moyens de solidarisation réversible, par exemple de type fermeture à glissière, permettant de joindre deux bords voisins de toiles d'occultation au fur et à mesure de leur déploiement. Ces toiles peuvent donc être reliées, ou solidarisées l'une à l'autre, sur leurs parties déployées alors que leurs parties enroulées ne le sont pas.

Selon un mode de réalisation préférentiel, mais non exclusif, de l'invention, ces moyens de solidarisation sont associés à une cassette pliable.

### 6.2 Jonction des toiles

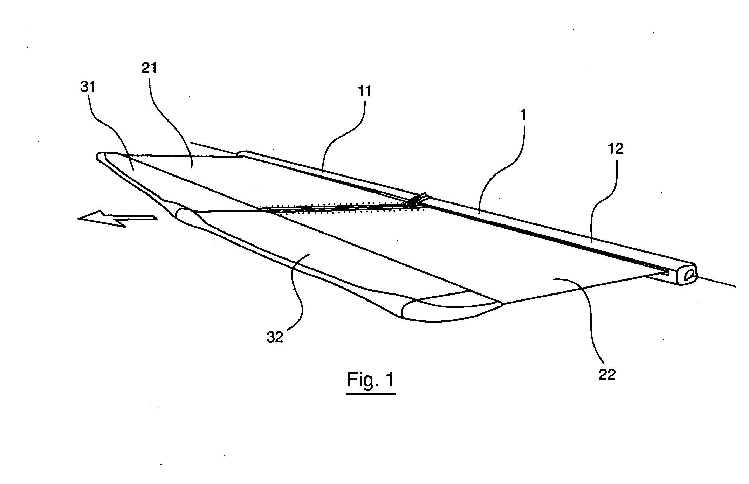

Les figures 1 à 4 illustrent un système d'occultation selon un mode de réalisation de l'invention. La figure 1 présente ce système dans une position d'utilisation. Ce système d'occultation comprend une cassette 1 composée de deux demi-cassettes 11 et 12 articulées l'une par rapport à l'autre. Chacune de ces demi-cassettes, respectivement 11 et 12, comprend un tube enrouleur, sur lequel est montée une toile d'occultation, respectivement 21 et 22. Des barres de tirage, respectivement 31 et 32, sont solidaires de l'extrémité de chacune des toiles 21 et 22.

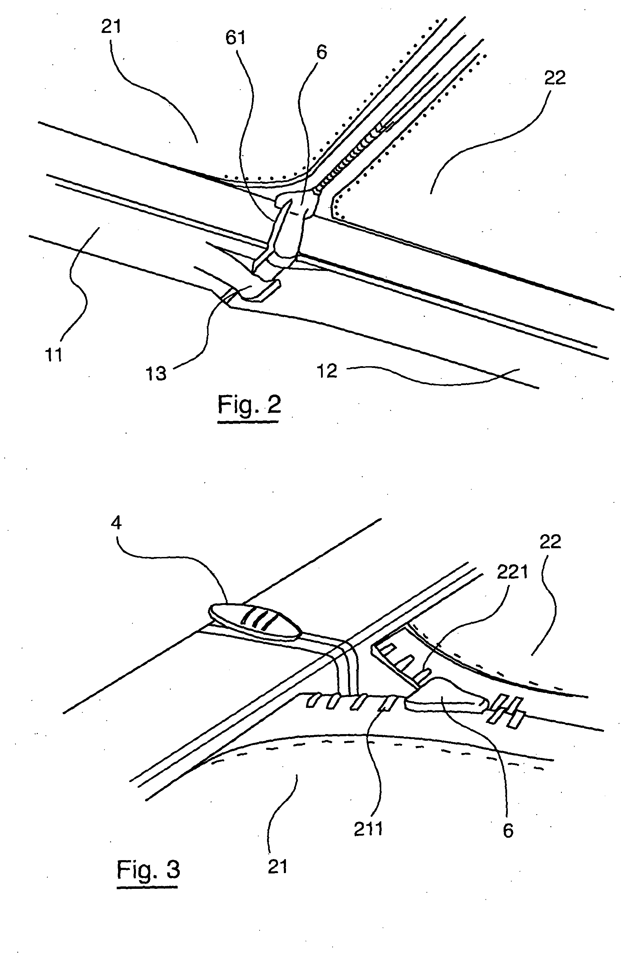

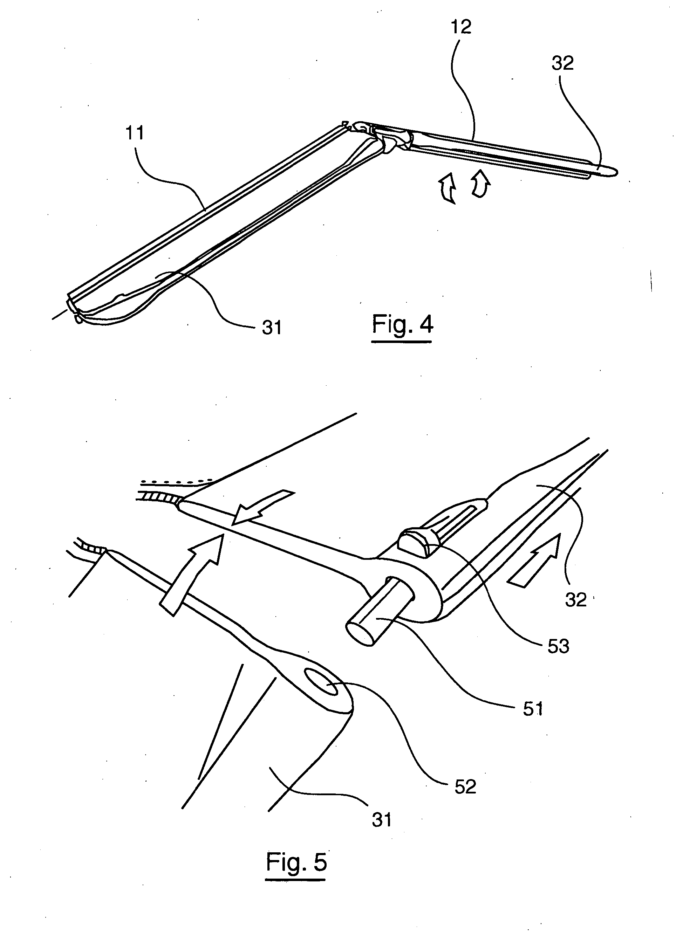

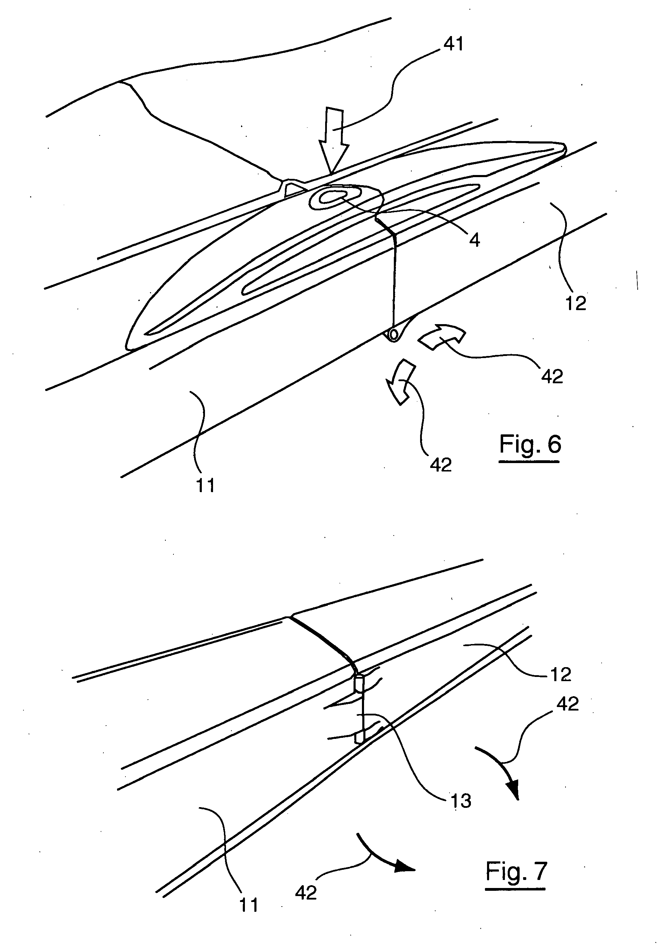

La cassette 1 est ainsi une cassette pliable, qui peut donc être entreposée beaucoup plus facilement qu'une cassette en une seule partie. Les deux demi-cassettes peuvent pivoter l'une par rapport à l'autre grâce à une charnière 13, représentée sur la figure 2. La figure 7 montre un autre mode de réalisation de cette charnière 13. La figure 4 représente les demi-cassettes 11 et 12 partiellement repliées.

Dans la position d'utilisation du dispositif, les tubes enrouleurs sont alignés, et les barres de tirage 31 et 32 sont jointes par leur extrémité. Dans certains cas, les deux tubes peuvent ne pas être complètement alignés, par exemple lorsqu'un effet de galbe est souhaité.

La figure 5 présente un exemple de mécanisme de jonction des extrémités des deux barres de tirage. Ce mécanisme comprend un doigt 51 monté mobile sur la barre de tirage 32, pouvant pénétrer dans un logement 52 dans la barre de tirage 31. Le mouvement du doigt est contrôlé par une commande 53 sur la barre de tirage 32.

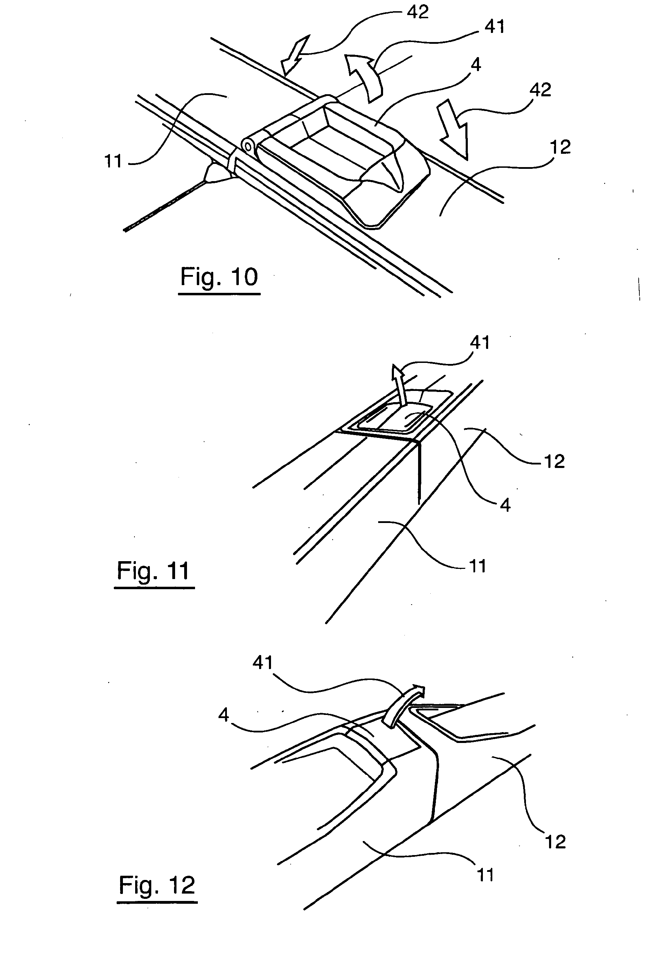

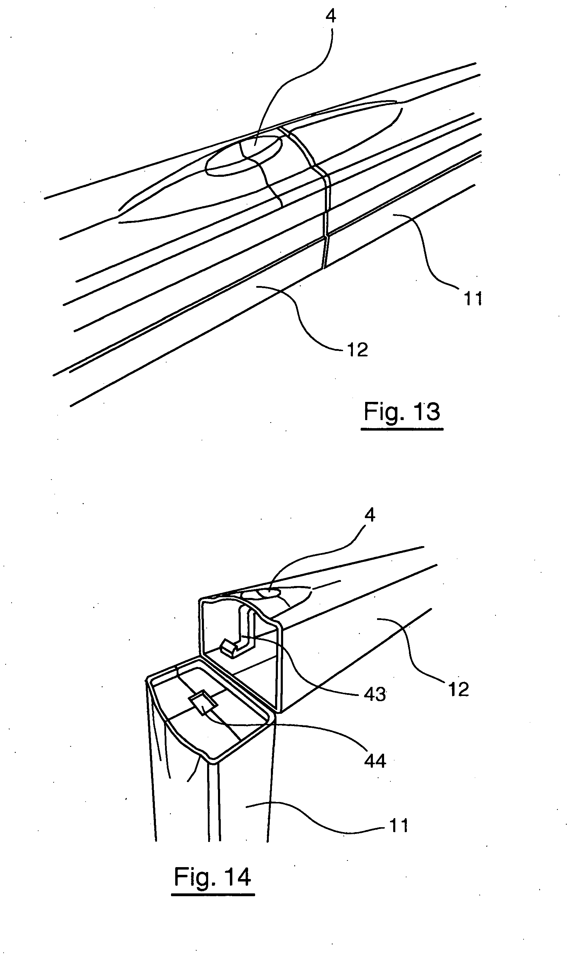

Dans la position d'utilisation du dispositif, les deux demi-cassettes sont verrouillées l'une à l'autre par leur extrémité. Une commande de déverrouillage 4 permet de déverrouiller ces deux demi-cassettes 11 et 12. Les figures 6, 8, 9, 10, 11, 12, 13 et 14 montrent des exemples de modes de réalisation de cette commande de déverrouillage 4, sur laquelle on peut agir dans le sens indiqué par la flèche 41 pour faire pivoter les demi-cassettes 11 et 12 dans le sens indiqué par les flèches 42. La figure 14 permet également de voir un exemple de mécanisme de verrouillage composé d'un crochet solidaire d'une des demi-cassettes et pouvant pénétrer dans une lumière 44 de l'autre demi-cassette.

Lorsque le dispositif est en position d'utilisation, il est possible de tirer sur les barres de tirage pour déployer les toiles 21 et 22. Ces deux toiles d'occultation se déploient alors parallèlement. Pour éviter qu'un jour apparaisse entre les bords des deux toiles d'occultation 21 et 22, au niveau du milieu de la cassette, un mécanisme de jonction des toiles est prévu.

Ce mécanisme de jonction comprend des moyens de solidarisation 211 et 221 complémentaires montés sur le bord de chacune des toiles 21 et 22. Un élément de jonction 6 est prévu pour solidariser entre eux, de façon réversible, les éléments de solidarisation 211 et 221.

Selon un mode de réalisation préférentiel, les moyens de solidarisation 211 et 221 et l'élément de jonction 6 forment une fermeture à glissière, telle que les fermetures connues sous la marque déposée « fermeture éclair ». Ils peuvent également former une fermeture semblable à celles utilisées pour la fermeture de sachets plastiques, et connues notamment sous la marque déposée « minigrip ». Bien entendu, les moyens de solidarisation 211 et 221 et l'élément de jonction 6 peuvent également former tout autre moyen de fermeture du même type ou ayant les mêmes effets de solidarisation et de désolidarisation progressives, lors du déploiement ou du repli respectivement.

Contrairement aux modes d'utilisation habituels de telles fermetures dans lesquels l'élément de jonction est mobile le long des moyens de solidarisation complémentaires qui sont essentiellement immobiles, l'élément de jonction 6 est ici relié de façon rigide à la cassette 1 (ou à tout le moins non déplaçable le long des toiles dépliées) par exemple par l'intermédiaire d'une patte de fixation 61.

Les toiles 21 et 22, elles, sont mobiles lors de leur déploiement. Au fur et à mesure de leur déploiement, l'élément de jonction 6 rassemble les moyens de solidarisation 211 et 221 fixés aux bords des toiles 21 et 22 et les solidarise. Seules les parties déployées des toiles 21 et 22 sont donc solidarisées, les parties de ces toiles étant enroulées sur les tubes enrouleurs restant indépendantes l'une de l'autre.

Avant le déploiement des toiles du store, il est nécessaire d'amorcer la solidarisation, par exemple en amenant les extrémités proches des barres de tirage des moyens de solidarisation 211 et 221 dans l'élément de jonction 6.

Les barres de tirage comprennent également avantageusement des moyens de liaison, qui peuvent assurer la solidarisation lorsque la cassette est dépliée.

Pour que les bords des toiles d'occultation 21 et 22 puissent être jointifs, cette toile est avantageusement au moins partiellement élastique. Selon un mode de réalisation préférentiel, une bande de toile élastique est cousue sur le bord des toiles d'occultation 21 et 22 et portent les moyens de solidarisation 211 et 221. Les bords des toiles peuvent ainsi se déformer pour se rapprocher l'un de l'autre.

### 6.5 Autres caractéristiques et avantages

Les modes de réalisation de l'invention décrits ci-dessus présentent le cas de cassettes de stores à enrouleurs pliables. Cependant l'invention peut également s'appliquer à tout autre cas de toiles d'occultation montées sur un ou plusieurs tubes enrouleurs, qui peuvent être alignés, décalés, ou former un angle entre eux, et dans lesquels il est utile de solidariser par leurs bords les toiles d'occultation. Plus de deux toiles peuvent ainsi être solidarisées les unes aux autres simultanément.

Dans un mode de réalisation particulier de l'invention, plusieurs tubes enrouleurs sont montés dans une cassette, qui peut être pliable, sur des axes parallèles, mais distincts. Cette disposition permet que les tubes soient légèrement décalés l'un par rapport à l'autre, et que les toiles d'occultation se déploient en se chevauchant légèrement, par exemple sur une largeur d'un centimètre. La solidarisation entre les toiles peut alors se faire par une fixation du type de celles distribuées sous la marque déposé « Velcro ». Dans un tel cas, il peut être possible de se passer d'un élément de jonction.

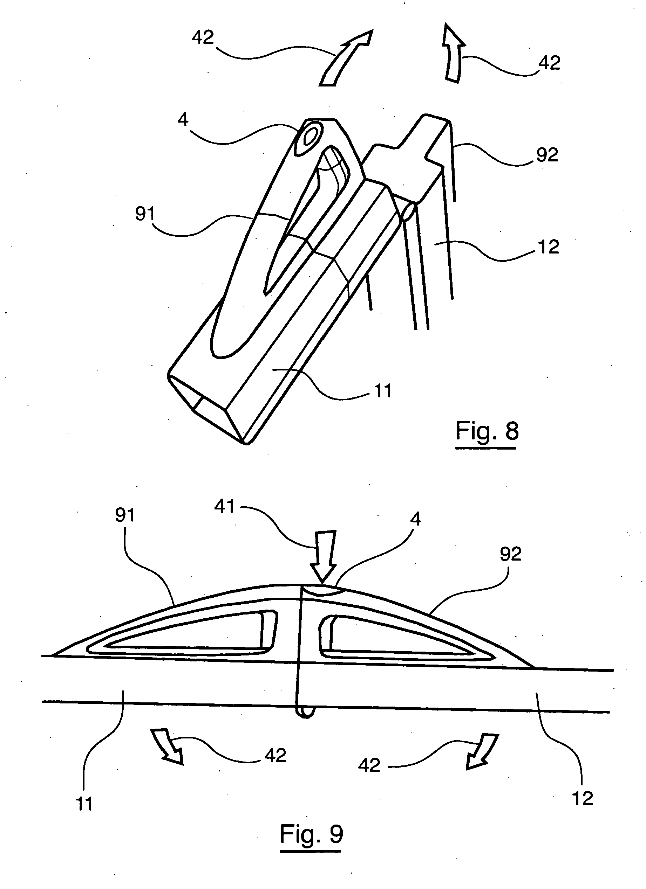

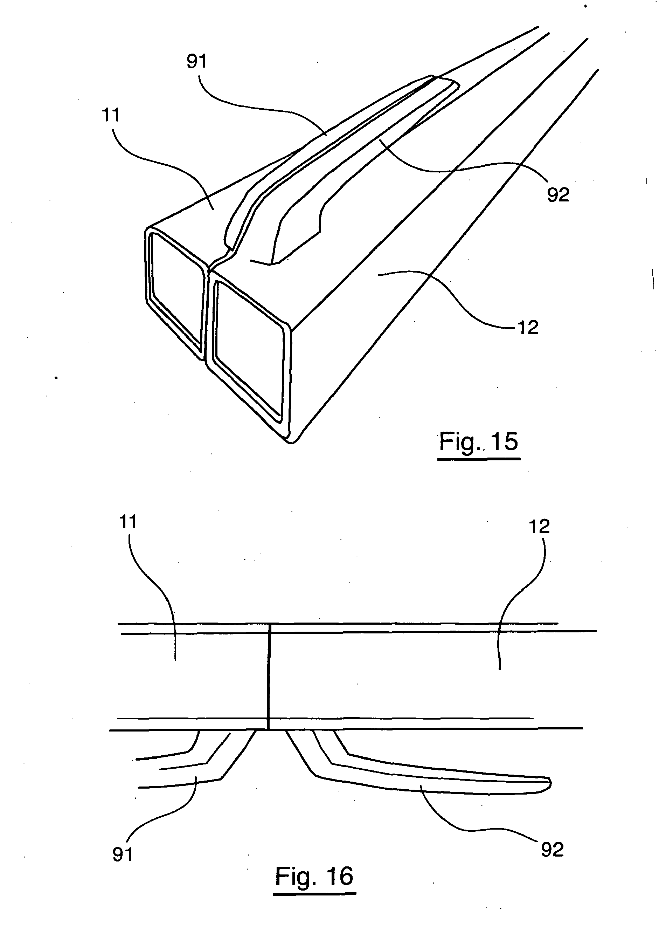

Selon un mode de réalisation facultatif de l'invention, illustré par les figures 8, 9, 15 et 16, les demi-cassettes 11 et 12 peuvent être munies de poignées respectivement 91 et 92 (formant une seule poignée lorsque la cassette est pliée, (cf. figures 15 et 16)) permettant de faciliter le transport et l'installation du dispositif d'occultation.

### 6.6 Mode de réalisation à curseur séparable

Un mode de réalisation avantageux de l'invention, pouvant être mis en oeuvre notamment quand les toiles d'occultation sont contenues dans des demi-cassettes distinctes, par exemple articulées l'une par rapport à l'autre, est illustré par les figures 17 à 20.

Sur la figure 19, les demi-cassettes ne sont pas illustrées, pour mieux laisser apparaître les éléments de l'invention.

Sur les figures 18 et 20, qui montre le dispositif en cours de pliage, une ou plusieurs toiles sont partiellement dépliées, pour mieux illustrer l'invention. Normalement, ces toiles sont enroulées complètement lorsque le dispositif est plié.

Selon ce mode de réalisation, quand les deux demi-cassettes 171, 172 portant les tubes à enrouleur sont alignés (figures 17 et 19), la jonction entre les deux bords voisins de toiles d'occultation toiles est assurée par une fermeture à glissière, dont l'élément de liaison 173, ou curseur (terme utilisé par analogie avec les fermetures à glissière classiques, bien qu'en l'occurrence cet élément reste immobile), qui assure l'assemblage des toiles 174, 175 au niveau de leur sortie de la cassette contenant le tube à enrouleur, est formé de deux demi-curseurs (ou portions de jonction) 1731, 1732.

Ces deux demi-curseurs apparaissent plus clairement sur la figure 18, qui illustre les deux demi-cassettes en cours de pliage (à l'aide de l'articulation 181 reliant les deux demi-cassettes 171 et 172).

Chacun de ces deux demi-curseurs 1731, 1732 est donc lié à une portion de cassette 171, 172. Quand le store est enroulé et que les deux portions de cassette ne sont pas dans l'alignement l'une de l'autre, comme le représente la figure 20, chaque demi-curseur 1731, 1732 maintient l'extrémité de la glissière liée à la toile contenue dans la portion de cassette correspondante.

Quand les demi-cassettes 171, 172 sont dans l'alignement l'une de l'autre, comme le représente la figure 19, les deux demi-curseurs 1731, 1732 sont rassemblés pour former le curseur 173, ou élément de liaison, similaire à ceux utilisés couramment pour les fermetures à glissière. Si les toiles d'occultation 174, 175 sont dépliées par la suite, le curseur 173 joint les bords voisins de ces deux toiles, Lors du repli, le curseur 173 assure la séparation des deux toiles 174, 175.

On constate que le fait que le curseur soit formé de deux pièces indépendantes, rapprochées l'une de l'autre, ne pose aucun problème pour la mise en oeuvre de l'invention, sans qu'il ne soit utile d'amorcer cette solidarisation.

Ainsi, on utilise une technique connue, mais de façon très différente, puisque le curseur est assemblé à chaque utilisation, et reste ensuite immobile (ce sont les toiles qui se déplacent).

Par ailleurs, cette approche permet de supprimer, ou à tout le moins de réduire fortement le besoin de course élastique du bord de toile. En effet, avec un curseur fixe tel que décrit précédemment, la toile doit non seulement accepter élastiquement un changement d'alignement entre sa position enroulée et sa position jointive, déroulée, mais également accepter localement, au niveau du curseur, une sur-course correspondant à sa rotation lors du repli de la cassette.

Chaque demi-curseur 1731, 1732 est affleurant avec la paroi 176, 177 de la demi-cassette correspondante, et ne risque donc pas d'être détérioré lorsque la cassette est pliée, ni de s'accrocher avec un élément extérieur et/ou perturber le rangement de la cassette. Aucune manipulation supplémentaire n'est nécessaire, tant au pliage qu'au dépliage, pour mettre en oeuvre ou désactiver la fermeture à glissière.

Comme déjà décrit précédemment, deux approches peuvent être mise en oeuvre, illustrées respectivement par les figures 19 et 20. Dans le cas de la figure 19, les moyens d'occultation comprennent uniquement deux toiles (entraînées le cas échéant par des barres de tirage).

Dans le cas de la figure 20, les moyens d'occultation présentent en outre des palettes d'occultation rigides 201, 202, assurant également la fonction de barre de tirage. Dans ce cas, les deux palettes 201 et 202 sont reliées par une articulation 203, s'étendant dans le prolongement de l'articulation 204 des deux demi-cassettes.

## Revendications

1. Dispositif d'occultation d'une surface d'un véhicule automobile,
comprenant au moins deux toiles d'occultation (21, 22) montées sur au moins un tube enrouleur (11, 12), et se déployant suivant des directions sensiblement parallèles, au moins deux desdites toiles (21, 22) comprenant des moyens complémentaires de solidarisation (211, 221) réversible permettant de joindre entre eux deux bords voisins des parties déployées, lesdites toiles (21, 22) n'étant pas jointes sur leur partie enroulée, et un élément assurant la jonction progressive desdits moyens de solidarisation (211, 221) au fur et à mesure du déploiement desdites toiles (21, 22), **caractérisé en ce que** ledit élément de jonction (6) comprend deux portions de curseur séparables, situées respectivement à proximité de l'un et de l'autre desdits tubes enrouleurs (11,12).

2. Dispositif d'occultation selon la revendication 1, **caractérisé en ce que** lesdits moyens de solidarisation (211, 221) et ledit élément de jonction (6) forment une fermeture à glissière.

3. Dispositif d'occultation selon l'une quelconque des revendications 1 à 2,
**caractérisé en ce qu'**au moins une desdites toiles d'occultation (21, 22) est au moins partiellement déformable.

4. Dispositif d'occultation selon l'une quelconque des revendications 1 à 3,
**caractérisé en ce qu'**au moins une desdites toiles d'occultation (21, 22) comporte une portion élastique portant une partie desdits moyens de solidarisation (211, 221).

5. Dispositif d'occultation selon l'une quelconque des revendications 1 à 4,
**caractérisé en ce que** chacune desdites toiles (21, 22) est montée sur un tube enrouleur (11, 12) distinct.

6. Dispositif d'occultation selon la revendication 5, **caractérisé en ce que** lesdits tubes enrouleurs (11, 12) peuvent prendre au moins deux positions :
- une première position dans laquelle lesdits tubes enrouleurs (11, 12) sont situés sensiblement sur un même axe ; et
- au moins une deuxième position dans laquelle les axes desdits tubes enrouleurs (11, 12) forment entre eux un angle non nul.

7. Dispositif d'occultation selon l'une quelconque des revendications 1 à 6,
**caractérisé en ce que** lesdits tubes enrouleurs (11, 12) sont montés dans une cassette pliable (1).

8. Dispositif d'occultation selon la revendication 7, **caractérisé en ce que** ladite cassette pliable (1) est formée de deux demi-cassettes articulées l'une par rapport à l'autre.

9. Dispositif d'occultation selon les revendications 6 et 8, **caractérisé en ce que**, lesdites deux portions de jonction sont montées respectivement sur l'une desdites demi-cassettes, et rapprochées l'une de l'autre lorsque lesdits tubes enrouleurs sont dans ladite première position.

10. Dispositif d'occultation selon l'une quelconque des revendications 8 et 9,
**caractérisé en ce que** lesdites portions de jonction sont sensiblement affleurantes avec la paroi latérale de la demi-cassette correspondante.

11. Dispositif d'occultation selon l'une quelconque des revendications 9 et 10,
**caractérisé en ce que** dans la ou lesdites deuxièmes positions, chacune desdites portions de jonction maintien une extrémité des moyens de solidarisation de la toile correspondante.

12. Dispositif d'occultation selon l'une quelconque des revendications 7 à 11,
**caractérisé en ce que** ladite cassette (1) comprend des moyens de verrouillage dans ladite première position et/ou dans au moins une desdites deuxièmes positions desdits tubes enrouleurs (11,12).

13. Dispositif d'occultation selon l'une quelconque des revendications 7 à 12,
**caractérisé en ce que** ladite cassette comprend une poignée de transport (91, 92).

14. Dispositif d'occultation selon l'une quelconque des revendications 1 à 13,
**caractérisé en ce qu'**il appartient au groupe comprenant :
- les cache-bagages ;
- les stores de compartimentage de coffre ;
- les stores d'occultation de pavillon ;
- les stores d'occultation de lunette arrière ;
- les stores d'occultation de pare-brise ;
- les stores de protection extérieure ou intérieure de pare-brise ;
- les dispositifs coupe-vent.

15. Véhicule automobile **caractérisé en ce qu'**il comprend au moins un dispositif d'occultation selon l'une quelconque des revendications 1 à 14, comprenant au moins deux toiles d'occultation montées sur au moins un tube enrouleur, et se déployant suivant des directions sensiblement parallèles, et au moins deux desdites toiles comprennent des moyens complémentaires de solidarisation réversible permettant de joindre entre eux deux bords voisins des parties déployées, lesdites toiles n'étant pas jointes sur leur partie enroulée, et un élément assurant la jonction progressive desdits moyens de solidarisation au fur et à mesure du déploiement desdites toiles, ledit élément de jonction comprenant deux portions de curseur séparables, situées respectivement à proximité de l'un et de l'autre desdits tubes enrouleurs.

## Claims

1. A shading device of a surface of a motor vehicle
comprising at least two shading fabrics (21, 22) mounted on at least one winding shaft (11, 12) and deploying along approximately parallel directions,
at least two of said fabrics (21, 22) comprising complementary means of reversible connection (211, 221) enabling the junction between them of two adjacent edges of the deployed parts, said fabrics (21, 22) not being joined on their wound part, and an element assuring the progressive junction of said connection means (211, 221) gradually according to the deployment of said fabrics (21, 22), **characterized in that**
said junction element (6) comprises two seperable sections of slider, located respectively close to the one and to the other winding shafts (11, 12).

2. The shading device according to claim 1, **characterized in that** said connection means (211, 221) and said junction element (6) form a zipper.

3. The shading device according to any one of the claims 1 to 2, **characterized in that** at least one of the said shading fabrics (21, 22) is at least partially deformable.

4. The shading device according to any one of the claims 1 to 3, **characterized**ing in that at least one of said shading fabrics (21, 22) comprises an elastic portion carrying a part of said connection means (211, 221).

5. The shading device according to any one of the claims 1 to 4, **characterized in that** each one of said concealing fabrics (21, 22) is mounted on a winding tube (11, 12).

6. The shading device according to claim 5, **characterized in that** said winding tubes (11, 12) can assume at least two positions:
- a first position in which said winding tubes (11, 12) are located approximately on the same axis; and
- at least a second position in which the axes of said winding tubes (11, 12) form between them a non-null angle.

7. The shading device according to any one of the claims 1 to 6, **characterized in that** said winding tubes (11, 12) are mounted in a pliable cassette (1).

8. The shading device according to claim 7, **characterized in that** said pliable cassette (1) is formed from two half cassettes articulated in relation to each other.

9. The shading device according to claims 6 and 8, **characterized in that** said two portions of the junction are mounted repectively on one of said half cassettes, and are moved closer to each other when said winding tubes are in said first position.

10. The shading device according to one of the claims 8 and 9, **characterized in that** said portions of the junction are approximately flush with the inner side wall of said corresponding half cassette.

11. The shading device according to one of the claims 9 and 10, **characterized in that** in said second position or said second positions each one of said portions of the junction supports an end of the connection means of the corresponding fabric.

12. The shading device according to any one of the claims 7 to 11, **characterized in that** said cassette (1) comprises the means of locking in said first position and/or in at least one of said second positions of said winding shafts (11, 12).

13. The shading device according to any one of the claims 7 to 12, **characterized in that** said cassette comprises a transport handle (91, 92).

14. The shading device according to any one of the claims 1 to 13, characteried in that it belongs to the group comprising
- luggage space cover blinds
- luggage space subdivision blinds;
- sunroof blinds
- rear window blinds
- windshield blinds
- blinds for exterior and interior protection of windshield;
- wind stop devices

15. A motor vehicle, **characterized in that** said vehicle comprises at least one shading device according to any one of the claims 1 to 14, comprising at least two shading fabrics mounted on at least one winding shaft, and deploying along approximately parallel directions, and at least two said fabrics comprising complementary means of reversible connection permitting to join between them two adjacent edges of the parts deployed, said fabrics not being joined on their wound part, and an element assuring the progressive connection of said connection means gradually according to the deployment of said fabrics, said junction element comprising two sections of separable sliders, located respectively close to each other of said winding shafts.

## Patentansprüche

1. Vorrichtung zum Verdecken einer Fläche eines Kraftfahrzeuges, die mindestens zwei Verdeckungs-Bahnen (21, 22) aufweist, die auf mindestens einer Wickelwelle (11, 12) aufgebracht sind und sich entlang etwa parallelen Richtungen entfaltet werden,
wobei mindestens zwei dieser Verdeckungs-Bahnen (21, 22) zusätzliche Verbindungsmittel (211, 221) aufweisen, die eine reversible Verbindung zweier benachbarter Ränder der entfalteten Teile ermöglichen, wobei diese Verdeckungs-Bahnen (21, 22) an ihrem jeweils aufgerollten Teil nicht verbunden sind und wobei ein Element vorhanden ist, welches nach und nach das Verbinden der Verbindungsmittel (211, 221) im Verlauf der Entfaltung der Verdeckungs-Bahnen (21, 22) sicherstellt,
**dadurch gekennzeichnet, dass** das Verbindungselement (6) zwei trennbare Teile von Schiebern aufweist, welche sich jeweils in der Nähe der einen und der anderen der Wickelwellen (11, 12) befinden.

2. Vorrichtung zum Verdecken nach Anspruch 1, **dadurch gekennzeichnet, dass** die Verbindungsmittel (211, 221) und das Verbindungselement (6) einen Gleitverschluss bilden.

3. Vorrichtung zum Verdecken nach einem der Ansprüche 1 bis 2, **dadurch gekennzeichnet, dass** mindestens eine der Verdeckungs-Bahnen (21, 22) zumindest teilweise verformbar ist.

4. Vorrichtung zum Verdecken nach einem der Ansprüche 1 bis 3, **dadurch gekennzeichnet, dass** mindestens eine der Verdeckungs-Bahnen (21, 22) einen elastischen Teil aufweist, der einen Teil der Verbindungsmittel (211,221) trägt.

5. Vorrichtung zum Verdecken nach einem der Ansprüche 1 bis 4, **dadurch gekennzeichnet, dass** jede der Verdeckungs-Bahnen (21, 22) auf einer anderen Wickelwelle (11, 12) aufgebracht ist.

6. Vorrichtung zum Verdecken nach Anspruch 5, **dadurch gekennzeichnet, dass** die Wickelwellen (11, 12) mindestens zwei Positionen einnehmen können:
- eine erste Position, in der die besagten Wickelwellen (11, 12) in etwa auf derselben Achse liegen und,
- mindestens eine zweite Position, in der die Achsen der besagten Wickelwellen (11, 12) untereinander einen Winkel bilden, der nicht null ist.

7. Vorrichtung zum Verdecken nach einem der Ansprüche 1 bis 6, **dadurch gekennzeichnet, dass** die Wickelwellen (11, 12) in einer faltbaren Kassette (1) angebracht sind.

8. Vorrichtung zum Verdecken nach Anspruch 7, **dadurch gekennzeichnet, dass** die faltbare Kassette (1) aus zwei Halbkassetten gebildet wird, die über eine Gelenkverbindung miteinander verbunden sind.

9. Vorrichtung zum Verdecken nach den Ansprüchen 6 und 8, **dadurch gekennzeichnet, dass** die zwei besagten Teile der Verbindung jeweils an einer der besagten Halbkassetten angebracht sind und aneinander gerückt werden, wenn die besagten Wickelwellen in der besagten ersten Position sind.

10. Vorrichtung zum Verdecken nach einem der Ansprüche 8 oder 9, **dadurch gekennzeichnet, dass** die besagten Teile der Verbindung in etwa bündig mit der Seitenwand der entsprechenden Halbkassette sind.

11. Vorrichtung zum Verdecken nach einem der Ansprüche 9 oder 10, **dadurch gekennzeichnet, dass** in der (den) besagten zweiten Position(en) jede der besagten Teile der Verbindung ein Ende der Verbindungsmittel der entsprechenden Verdeckungs-Bahnen hält.

12. Vorrichtung zum Verdecken nach einem der Ansprüche 7 bis 11, **dadurch gekennzeichnet, dass** die Kassette (1) Mittel zum Verriegeln in der ersten besagten Position und/oder in mindestens einer der besagten zweiten Positionen der Wickelwellen (11, 12) aufweist.

13. Vorrichtung zum Verdecken nach einem der Ansprüche 7 bis 12, **dadurch gekennzeichnet, dass** die besagte Kassette einen Tragegriff (91, 92) aufweist.

14. Vorrichtung zum Verdecken nach einem der Ansprüche 1 bis 13, **dadurch gekennzeichnet, dass** sie zu der folgendes umfassenden Gruppe gehört:
- Gepäckabdeckungen;
- Rollos zum Aufteilen von Kofferräumen;
- Rollos zum Abdecken von Fahrzeugdächern;
- Rollos zum Abdecken von Heckfenstern;
- Rollos zum Abdecken von Windschutzscheiben;
- Rollos für den Außen- oder Innenschutz von Windschutzscheiben;
- Windabweiser-Vorrichtungen.

15. Kraftfahrzeug, **dadurch gekennzeichnet, dass** es mindestens eine
Vorrichtung zum Verdecken nach einem der Ansprüche 1 bis 14 aufweist, welche mindestens zwei Verdeckungs-Bahnen aufweist, die auf mindestens einer Wickelwelle aufgebracht sind und entlang etwa parallelen Richtungen entfaltet werden, wobei mindestens zwei der besagten Verdeckungs-Bahnen zusätzliche Verbindungsmittel Mittel aufweisen, die eine reversible Verbindung zweier benachbarter Ränder der entfalteten Teile ermöglichen, wobei die besagten Verdeckungs-Bahnen an ihrem jeweils aufgerollten Teil nicht verbunden sind und wobei ein Element vorhanden ist, welches nach und nach das Verbinden der Verbindungsmittel im Verlauf der Entfaltung der Verdeckungs-Bahnen sicherstellt, wobei das Verbindungselement zwei trennbare Teile von Schiebern aufweist, welche sich jeweils in der Nähe der einen und der anderen der Wickelwellen befinden.
